# EUROPEAN PATENT APPLICATION

(11) **EP 4 312 333 A1**
(43) Date of publication of application: **31.01.2024**
(21) Application number: 22187129.6
(22) Date of filing: 27.07.2022
(51) Int. Cl.: H02J 3/32, G06Q 10/06, G06Q 50/06, H02J 3/38, H02J 7/34, H02J 7/35, H02J 13/00

(54) **SYSTEM AND METHOD FOR MANAGING ENERGY AT PREMISES**

(71) Applicant: OptiWatti Oy, 02240 Espoo (FI)
(72) Inventor: Marjeta, Juha, Espoo (FI)
(74) Representative: Aaltonen, Janne Lari Antero

(57) **Abstract**

Disclosed is a system (100, 200) for managing energy at premises (202, 404). The system comprises first device(s) (102, 204) configured to generate first measurement data indicative of real-time production of energy by first energy source(s) (214); second device(s) (104, 206) configured to generate second measurement data indicative of real-time withdrawal of energy from second energy source(s) (216); the first device(s) and the second device(s) configured to generate virtual measurement data indicative of real-time consumption of energy by load(s) (218); and controller (106, 210) communicably coupled to given device via transceiver(s) (108, 212). The controller is configured to receive given measurement data from given device; determine whether overproduction of energy occurs at given time; and when it is determined that overproduction of energy occurs, manage excess energy that is produced at given time according to at least one criterion, wherein amount of the excess energy is equal to said difference.

## Description

### TECHNICAL FIELD

The present disclosure relates to systems for managing energy at premises. The present disclosure relates to methods for managing energy at premises. The present disclosure relates to computer program products for managing energy at premises.

### BACKGROUND

Electricity is a crucial part of contemporary life and important to global economy. Electricity is used in all dimensions of life, such as for lighting, machinery, electronics, public transportation systems and the like. Conventionally, buildings consume a major percentage (i.e., more than 50%) of total production of electricity. Recent advancements in technology have paved the way for constructing smart buildings, which uses electricity extensively. Herein, the smart buildings use technology to enable efficient and economic use of energy resources, and use automated processes to automatically control operation of loads in the smart building. Herein, the loads may include, but are not limited to, heating air conditioning, ventilation, security, lighting and the like.

Typically, the smart buildings procure energy from a primary energy source, such as, a power grid. Nowadays, the smart buildings may also generate energy using a secondary energy source arranged thereat to power up at least some of the loads. As an example, the secondary energy source may be a solar module, wherein the solar module comprises at least one photovoltaic solar panel that absorbs sunlight as a source of energy and converts solar energy in the sunlight to produce electricity. The primary energy source and the secondary energy source may collectively function as an electricity supply system for the smart buildings.

Presently, it is observed that the electricity supply systems of the smart buildings may provide an amount of energy that is greater than an amount of energy required by the loads. As a result, there may be availability of surplus energy, which presently gets wasted and/or causes other problems. In some cases, the problems may be, such as, but not limited to, electrical surges, frequent burning out of lighting, overheating of circuit wiring of the electrical supply system and the loads. In order to avoid said problems, a given load may be disconnected and re-connected to the electricity supply system. The energy generated by the secondary energy source may be transferred to the primary energy source. However, the transferring of energy may encounter pricing issues, such as negative pricing of electricity. In negative pricing of electricity, a user of the electricity has to pay for transferring the electricity to the primary energy source, which is undesirable.

Therefore, in light of aforementioned discussion, there exists a need to overcome the aforementioned drawbacks associated with management of energy in a property.

### SUMMARY

The present disclosure seeks to provide a system for managing energy at a premises. The present disclosure also seeks to provide a method for managing energy at a premises. The present disclosure also seeks to provide a computer-program product for managing energy at a premises. An aim of the present disclosure is to provide a solution that overcomes at least partially the problems encountered in prior art.

In a first aspect, the present disclosure provides a system for managing energy at a premises, the system comprising:
at least one first device configured to generate first measurement data indicative of real-time production of energy by at least one first energy source;
at least one second device configured to generate second measurement data indicative of real-time withdrawal of energy from at least one second energy source;
the at least one first device and the at least one second device configured to generate usage data indicative of real-time consumption of energy by at least one load; and
a controller communicably coupled to the at least one first device and the at least one second device via at least one transceiver, the controller being configured to:
   - receive the first measurement data, the second measurement data, and the usage data from the at least one first device and the at least one second device, respectively;
   - determine whether overproduction of energy occurs at a given time; and
   - when it is determined that the overproduction of energy occurs at the given time, manage excess energy that is produced at the given time according to at least one criterion, wherein an amount of the excess energy is equal to said difference.

In a second aspect, the present disclosure provides a method for managing energy at a premises, the method comprising:
- receiving a first measurement data from at least one first device, a second measurement data from at least one second device, and a usage data from the at least one first device and the at least one second device, wherein the first measurement data is indicative of real-time production of energy by at least one first energy source, the second measurement data is indicative of real-time withdrawal of energy from at least one second energy source, and the usage data is indicative of real-time consumption of energy by at least one load;
- determining whether overproduction of energy occurs at a given time; and
- when it is determined that the overproduction of energy occurs at the given time, managing excess energy that is produced at the given time according to at least one criterion, wherein an amount of the excess energy is equal to said difference.

In a third aspect, the present disclosure provides a computer-program product for managing energy at a premises, wherein the computer program product comprises a non-transitory machine-readable data storage medium having stored thereon program instructions that, when accessed by a processing device, cause the processing device to execute steps of a method of the second aspect.

Embodiments of the present disclosure substantially eliminate or at least partially address the aforementioned problems in the prior art, and enable efficient management of energy within the premises.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIGs. 1A and 1B are block diagrams of a system for managing energy at a premises, in accordance with different embodiments of the present disclosure;
FIG. 2 is a schematic illustration of an exemplary system for managing energy at a premises, in accordance with an embodiment of the present disclosure;
FIG. 3 is an exemplary priority order for use of excess energy for consumption by at least one load, in accordance with an embodiment of the present disclosure;
FIG. 4 is an exemplary floor plan of a premises, in accordance with an embodiment of the present disclosure; and
FIG.5 is shown an illustration of a flowchart depicting steps of a method for managing energy at a premises, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a system for managing energy at a premises, the system comprising:
at least one first device configured to generate first measurement data indicative of real-time production of energy by at least one first energy source;
at least one second device configured to generate second measurement data indicative of real-time withdrawal of energy from at least one second energy source;
the at least one first device and the at least one second device configured to generate usage data indicative of real-time consumption of energy by at least one load; and
a controller communicably coupled to the at least one first device and the at least one second device via at least one transceiver, the controller being configured to:
   - receive the first measurement data, the second measurement data, and the usage data from the at least one first device and the at least one second device, respectively;
   - determine whether overproduction of energy occurs at a given time; and
   - when it is determined that the overproduction of energy occurs at the given time, manage excess energy that is produced at the given time according to at least one criterion, wherein an amount of the excess energy is equal to said difference.

In a second aspect, the present disclosure provides a method for managing energy at a premises, the method comprising:
- receiving a first measurement data from at least one first device, a second measurement data from at least one second device, and a usage data from the at least one first device and the at least one second device, wherein the first measurement data is indicative of real-time production of energy by at least one first energy source, the second measurement data is indicative of real-time withdrawal of energy from at least one second energy source, and the usage data is indicative of real-time consumption of energy by at least one load;
- determining whether overproduction of energy occurs at a given time; and
- when it is determined that the overproduction of energy occurs at the given time, managing excess energy that is produced at the given time according to at least one criterion, wherein an amount of the excess energy is equal to said difference.

In a third aspect, the present disclosure provides a computer-program product for managing energy at a premises, wherein the computer program product comprises a non-transitory machine-readable data storage medium having stored thereon program instructions that, when accessed by a processing device, cause the processing device to execute steps of a method of the second aspect.

The present disclosure provides the aforementioned system, method and computer program product to manage the excess energy in the premises. The excess energy is available within the premises when consumption of energy by the at least one load is less than a total of production of energy and withdrawal of energy. Herein, the excess energy is managed automatically according to the at least one criterion, which helps to reduce or nullify wastage of energy and optimize energy management costs. In particular, costs involved in purchasing and transferring of energy are reduced, thereby reducing a financial burden on a user using the at least one load. Moreover, since the user's involvement in management of the excess energy is minimized, the excess energy is managed round the clock without human judgement errors. The present system and method can be used with any electricity contract (such a fixed pricing contract, a spot pricing contract, or similar). The system is inexpensive, easy to implement and use, and reliable. The method is simple, and takes into account all requisite inputs that affect energy management at the premises.

Throughout the present disclosure, the term *"premises"* refers to a house or a building, together with a portion of land and outbuildings surrounding said house or building. Examples of the premises may include, but are not limited to, a house (for example, such as a bungalow, a villa, an apartment, and the like), a housing complex (for example, a multi-storey structure having multiple apartments), a hotel, a hospital, an office premises, a commercial establishment (for example, such as a shop, a shopping mall, an office premises, and the like), an industrial building (for example, such as a workshop, factory).

Optionally, a given device is implemented as an energy meter. Herein, the energy meter is an electrical measuring device, which is used to record electrical energy flowing in a circuit wherein the energy meter is installed, over a period of time, in terms of a given unit of measurement. The given unit of measurement commonly used is kilowatt hour (kWh), but could also be watt hour (Wh), megawatt (MWh), gigawatt hour (GWh), joules (J), kilojoules (kJ), and the like. Herein, the period of time may be a minute, an hour, 2 hours, 4 hours, 12 hours, 24 hours (a day), a week, and similar. The given device continuously measures instantaneous voltage and current to give energy used in the given unit of measurement. The given device is at least one of: the at least one first device, the at least one second device. The given device may operate on at least one of: a single-phase alternating current (AC) frequency, a two-phase AC frequency, a three-phase AC frequency, a multi-phase AC frequency. Optionally, the at least one first device is electrically connected between the at least one first energy source and the at least one load; and the at least one second device is electrically connected between the at least one second energy source and the at least one load. In this regard, the at least one first device is configured to record electrical energy when energy flows from the at least one energy source to the at least one load; and the at least one second device is configured to record electrical energy when energy flows from the at least one second energy source to the at least one load. The at least one first device and the at least one second device may be interconnected to each other. The given device is communicably coupled to a transceiver, which enables communication of the given device with the controller.

Optionally, the given device may be at least one of: an analog meter, a digital meter. The analog meter, otherwise known as electromechanical meter, has an analog display with multiple electromechanical spinning dials which are read to determine an accurate amount of energy flowing through the given device. Alternatively, the digital meter, otherwise known as electric meter, may have a digital display and automatically records energy flowing through the given device.

The at least one first device measures the amount of energy produced by the at least one first energy source within the premises, in real time, over a period of time. These measurements constitute the first measurement data. The at least one first device is electrically coupled to the at least one first energy source for billing and monitoring purposes. The at least one first device may be installed on/in any one of: a utility pole serving the premises, a meter box arranged on an outer wall outside the premises, a meter box arranged on an inner wall inside the premises.

Optionally, the first measurement data is communicated to the controller via a first Modbus serial interface. Herein, a given Modbus serial interface is a type of digital communication interface that allows communication of a given measurement data between the given device and the controller, wherein the given device and the controller may be connected on different types of buses or networks. The first measurement data is a record of a plurality of readings of the amount of energy produced by the at least one first energy source over the period of time.

Optionally, the first measurement data comprises at least one of: an amount of energy produced, an amount of energy consumed, a numeric value of current, a first numeric value of active and reactive power, a first numeric value of voltage, by/of the at least one first energy source over the period of time. The first measurement data additionally optionally helps to monitor and analyse performance of the at least one first energy source. The first measurement data can be stored in a data repository in a given format (for example, such as a text file including values of the amount of energy produced over the period of time).

Optionally, the at least one first energy source is installed in the premises for real-time production of energy. A technical effect of employing the at least one first energy source in the premises is that real-time production of energy by the at least one first energy source lowers a requirement of withdrawing energy from an external energy source (such as the at least one second energy source), and consequently lowers an amount of money payable in electricity bill, lowers carbon footprint, and potentially increases monetary value of the premises. Another technical effect is an ability of the premises to contribute in overall management of energy of a given area. Herein, increased real-time production of energy by the at least one first energy source also increases an amount of energy transferred to the at least one second energy source. This would be a beneficial solution to meet ever growing energy needs of the world.

The energy produced by the at least one first energy source in real-time might be optionally stored in at least one of: a battery, a pumped electricity storage, a gravity energy storage, a compressed air energy storage.

The at least one second device is an equipment that measures the amount of energy withdrawn, or the amount of energy transferred from/to the at least one second energy source in real time, over a period of time. These measurements constitute the second measurement data. The at least one second device is electrically coupled to the at least one second energy source for billing and monitoring purposes. The at least one second device is installed in a manner that is similar to the installation of the at least one first device. Optionally, at least one third device may be used to generate the usage data when the at least one second device is bidirectional in nature (i.e., able to measure the amount of energy withdrawn or the amount of energy transferred from/to the at least one second energy source).

Optionally, the second measurement data is communicated to the controller via a second Modbus serial interface. Herein, the given Modbus serial interface is similar to the first Modbus serial interface. Optionally, the at least one second device is calibrated in a manner similar to the calibration of the at least one first device. The second measurement data is a record of a plurality of readings of the amount of energy withdrawn and the amount of energy transferred from/to the at least one second energy source over the period of time.

Optionally, the second measurement data comprises at least one of: an amount of energy withdrawn from the at least one second energy source, an amount of energy transferred to the at least one second energy source, a second numeric value of active and reactive power, a second numeric value of voltage, by/of the at least one second energy source over a period of time. The second measurement data is stored in a manner similar to storing of the first measurement data.

Optionally, the at least one second energy source is installed external to the premises. A technical effect of employing the at least one second energy source is that real-time withdrawal or real-time transfer of energy from the at least one second energy source ensures that the at least one load has enough energy to function even when the at least one first energy source does not produce energy. The at least one second energy source is configured to provide energy to a plurality of premises. The energy withdrawn from the at least one second energy source are procured in AC, and can be used directly by the at least one load.

Optionally, the at least one first energy source is at least one of: a renewable energy source, a non-renewable energy source, and wherein The at least one first energy source may produce electricity in form of at least one: a direct current (DC), a single-phase alternating current (AC), a three-phase alternating current (AC). When the at least one first energy source produces electricity in the form of the DC, an inverter is connected to convert the DC to AC. Examples of renewable energy source may include, but is not limited to, a solar energy source (for example, such as a solar panel device), a geothermal energy source, a wind energy source, a hydro energy source (for example, such as a hydro-power plant), a tidal energy source, a biomass energy source (for example, such as a biopower plant). Examples of non-renewable energy source may include, but is not limited to, a coal-based power plant, a natural gas-based power plant, an oil-based power plant, a nuclear energy power plant, and the like.

Optionally, the at least one second energy source is at least one power grid. The at least one power grid is an interconnected power distribution network to generate and distribute electricity from power plants to a large area, wherein the premises is situated within the large area. The interconnected network comprises power stations, electrical substations, electric power transmission and electric power distribution devices (such as electrical cables, poles, and the like). The at least one power grid is operated with the single-phase AC or the three-phase AC. The frequency of the AC may be selected as required.

The at least one first device and the at least one second device are configured to measure the amount of energy consumed by the at least one load, in real time, over the period of time. For example, the given device measures (i.e., counts) a number of units consumed by the at least one load in the given unit of measurement. The given device generates the usage data, which is a total amount of energy consumed by the at least one load, the total amount of energy being provided by at least one of: the at least one first energy source, the at least one second energy source. Optionally, the usage data may be at least one of: a computational data, a calculated data, a virtual measurement data.

Optionally, the usage data comprises at least one of: the total amount of energy consumed by the at least one load, a third numeric value of active and reactive power, a third numeric value of voltage, by/of the at least one load. The at least one load is stored in a manner similar to the first measurement data and the second measurement data.

Optionally, the at least one load is at least one of: an electrical radiator, a ceiling heater, an under-floor heater, a window heating system, a water heating unit, a trace heating unit, an air source heat pump, a cooler, an air conditioner, a battery of an electric car, a car heater, a ventilation unit, an energy storage means, a device which consumes energy faster than a natural rate of energy discharge. The system in the present disclosure is able to manage a wide range of loads, which may be available within the premises. A technical effect is that the wide range of loads can be simultaneously used for at least one of: immediate consumption of energy at a given time, consumption of energy at a later time, storing of energy. Typically, the energy produced by the at least one first energy source and the energy withdrawn from the at least one second energy source is sufficient for meeting energy requirements of the at least one load. A number of loads that are electrically connected within the premises and their usage impacts an electricity bill of the premises. The at least one load is communicably coupled to the controller via the transceiver.

Optionally, the at least one load, in operation, uses energy to warm a given space. The given space could be a room of the premises, an entirety of the premises, at least one car at/in proximity of the premises, and the like. Different types of such loads are explained briefly as follows. The electrical radiator is a standalone unit placed in a room (for example, in a coldest area of the room) within the premises, wherein the electrical radiator consumes energy to heat up and transfer the heat to surrounding air inside the room via convection and radiation. The ceiling heater is a surface heating system comprising low temperature heating elements which emits radiant heat to warm the given space. The under-floor heater is able to achieve indoor climate control in the room using hydronic or electrical heating elements embedded in a floor of the room. The window heating system comprises window heat pumps that may be controlled individually to regulate temperature within the room by heating windows of the room. The water heating unit comprises a tank that can hold water and a heater to heat the water held inside the tank. The water heating unit is able to hold hot water in the tank until the hot water is required for use. The trace heating unit is an electrical heating element that is in physical contact along a length of a pipe, such as a water pipe, throughout the premises. The trace heating unit is used to regulate temperature of the pipes to protect the pipes from freezing, so as to maintain a constant flow of water in the pipes, prevent breakage of the pipes due to freezing, and the like. The air source heat pump absorbs heat from outside the premises and releases the heat inside using a vapor-compression process, and can be used alongside the at least one load that warms the given space. The car heater is part of a heating, ventilation, and air conditioning (HVAC) system of the car, and uses a hot engine coolant flowing through a heater core to regulate (for example using a thermostat) temperature inside of a car.

Optionally, the at least one load, in operation, uses energy to cool the given space. Different types of such loads are explained briefly as follows. The cooler cools air through evaporation of water. The air conditioner provides cold air inside the given space by actually removing heat and humidity from air inside the given space, and returns cooled air to the given space via an indoor unit, thereby transferring the heat and humidity outside the given space via an outdoor unit. The ventilation unit comprises at least two fans and at least two duct systems to provide ventilation in the given space.

Optionally, the at least one load is the battery of the electric car. The battery is rechargeable and has a capacity to power the electric car. Examples of battery of the electric car may include, but is not limited to, a lithium-ion battery, a nickel-metal hydride battery, a lead-acid battery, and the like. The battery of the electric car may be used to provide energy to the other load(s) within the premises. A technical effect is that this energy can be consumed independently by the other load(s).

Optionally, the energy storage means is at least one of: a pumped hydroelectric energy storage, a compressed air energy storage, a flywheel energy storage, a thermal energy storage. A technical effect of the energy storage means is to store energy provided by a given energy source for later use, and to provide the stored energy for consumption by the at least one load, as required. Furthermore, the energy storage means helps to meet energy requirements at the premises in an undesirable event of energy deficit at the premises. Additionally, the energy storage means is used to store the energy, and is subsequently reconverted back to electrical energy to be consumed by other load(s).

The device which consumes energy faster than the natural rate of energy discharge may be a battery, which is used to power a given load. The given load can be electrically coupled with the battery in any required manner. The battery is used as a standalone unit for providing energy to the given load.

Throughout the present disclosure, the term *"controller"* refers to a computational device that is operable to respond to information, to process information, and to perform actions based on said processing. The controller may be implemented as hardware, software, firmware, or a combination of these. In an example, the controller may be an embedded microcontroller, a microprocessor, a processor of a computer or a portable computing device, or similar.

The controller is communicably coupled to the at least one first device and the at least one second device via the transceiver. The transceiver is a combination of a transmitter and a receiver. The transceiver facilitates wireless and/or wired communication between the controller and the given device. The transceiver transmits signals, as well as receives signals from the given device. Optionally, a frequency of transmitting and/or receiving the signals lies in an industrial, scientific, and medical (ISM) radio band. The ISM radio band comprises frequencies which can be used for industrial, scientific, and medical applications. The frequencies in the ISM radio band may range from 6.765 megahertz (MHz) up to 246 gigahertz (GHz). For example, the frequency may be 868 megahertz (MHz). The controller is configured to selectively electrically connect or disconnect at least one of: the at least one first energy source, the at least one second energy source, the at least one load.

Optionally, the system further comprises a control panel arrangement comprising a plurality of control panels to which at least one of: the at least one first device, the at least one second device, the controller are electrically coupled. The control panel arrangement may comprise a plurality of control panels to which additional system elements are electrically coupled. The control panel arrangement comprises DIN slots to arrange the at least one of: the at least one first device, the at least one second device, the controller, per control panel. For example, 3 by 2 (3x2) DIN slots per control panel are required to arrange at least one of: the at least one first device, the at least one second device, the controller, per control panel.

Optionally, the control panel arrangement encloses the controller, wherein the control panel typically acts like a housing. The plurality of control panels are configured to display at least one of: the first measurement data, the second measurement data, and the usage data. The control panel arrangement is installed within the premises.

The first measurement data, the second measurement data, and the usage data are received, optionally, in real time, via the transceiver from the at least one first device, and the at least one second device. The given data is received with no lag, thereby enabling the controller in making prompt deductions regarding a situation of energy within the premises. The controller is further configured to determine a required action for managing the energy within the premises.

The *"overproduction of energy"* refers to an energy management situation that occurs when an amount of energy available at the premises at the given time is more than an amount of energy consumed by the at least one load at the given time. The given time may be any of: a given time instant (i.e., a moment in time), a given time period (i.e., a given time duration), a given time interval.

Optionally, the overproduction of energy at a given time is based on a difference between a total amount of energy received at the given time and an amount of energy consumed at the given time, wherein the total amount of energy received at the given time is equal to a sum of an amount of energy produced by the at least one first energy source at the given time and an amount of energy withdrawn from the at least one second energy source at the given time,
and wherein the amount of energy consumed at the given time is equal to a sum of an amount of energy flowing from the at least one first energy source to the at least one load via a first cut-off point and an amount of energy flowing from the at least one second energy source to the premises via a second cut-off point. Herein, a given cut-off point may be at least one of: an entry point, an exit point, a bidirectional point, of the amount of energy flowing from a given energy source. The given cut-off point allows a certain amount of energy to flow from the given energy source irrespective of the amount of energy available at the at least one second energy source and produced by the at least one first energy source.

For example, a first energy source may produce 50 units of energy, but a set of load(s) within the premises may consume only 20 units of energy. Hence, the first cut-off point may allow flow of only 20 units from the first energy source to the set of load(s). Similarly, 1000 units of energy may be available at a second energy source, but the given premises may only require 200 units of energy. Hence, 200 units of energy may flow from the second energy source via a second cut-off point to the premises.

In an instance, it is determined that the overproduction of energy does not occur at the given time. In such an instance, the at least one load continues to receive the total amount of energy from the at least one energy source and the at least one second energy source at the given time and is able consume said energy in its entirety. In another instance, the overproduction of energy may occur when the total amount of energy received at the given time is not fully utilized by the at least one load. Typically, energy produced by the at least one first energy source and the at least one second energy source must be used instantaneously, or it needs to be stored. Optionally, the overproduction of energy may be indicated by a negative reading of the electrical energy obtained from the at least one second device.

When it is determined that the overproduction of energy occurs at the given time, the real-time production of energy by the at least one first energy source, real-time withdrawal of energy from the at least one second energy source, and real-time consumption of energy by the at least one load is adjusted so as to properly utilize the excess energy. The excess energy may be used within the premises or transferred to the at least one second energy source based on the at least one criterion. Herein, the term *"criterion"* refers to a benchmark on which a judgement or decision may be based. The at least one criterion is used to decide management of excess energy available at the premises.

Optionally, the at least one criterion is at least one of:
- when a spot price of electricity at the given time is greater than a predefined transfer price of electricity at the given time, minimize the amount of energy consumed at the given time and transfer the excess energy to the at least one second energy source;
- when a spot price of electricity at another time is greater than a transfer price of electricity at the given time, use the excess energy for consumption by the at least one load so as to nullify or minimize a requirement of spot-priced energy;
- when a spot- price of electricity is negative, use the excess energy for consumption by the at least one load so as to maximize the amount of energy consumed at the given time such that the excess energy is un-transferred or minimally-transferred to the at least one second energy source;
- when a total price of electricity is negative, control the at least one first energy source to minimize the amount of energy produced by the at least one first energy source;
- utilize a priority order to use the excess energy for consumption by the at least one load, wherein the priority order is an order of decreasing priorities in which the excess energy is to at least be consumed by the at least one load;
- If the (received) price of sold electricity at some time period compared to a previous or a later time period is higher than transmission price, then reduce the consumption and maximise selling of electricity.

In this regard, the term *"spot price"* refers to a current price of electricity.

The spot price is paid by a user for withdrawing energy from the at least one second energy source. Currently, the spot price of electricity is updated every half-hour, every hour, and the like, during the day. The spot price of electricity depends on at least one of: an amount of energy supplied by the at least one second energy source, an amount of energy demand by the load(s), a geolocation of the premises. The spot price is typically published by a pricing manager. The pricing manager may be a human or a software.

Typically, the spot price of electricity during non-peak hours is lesser than the spot price of electricity during peak hours. Herein, the term *"non-peak hours"* refers to a time of a day when energy demand in a given area is low. The term *"peak hours"* refers to a time of the day when energy demand in the given area is high. Herein, the given area is larger than the premises, and the premises lies within the given area. In an instance, during the non-peak hours, the spot price of electricity in a city may be 0.9c per kWh. Conversely, the spot price of electricity in the city during peak hours may be 18.9c per kWh.

Optionally, the non-peak hours and the peak hours depends on at least one of: a time of a day, a day of a week, a geolocation of the premises, a weather during a given time, a current temperature at a given time, a climate at a given time, a condition of environment at a location of the premises, a season at a given time. For instance, a given premises may be an office that typically operates from Monday to Friday (i.e., weekdays), from 9 a.m. to 6 p.m. The office comprises load(s) that are operated during such office hours. Examples of load(s) in the office may include, but is/are not limited to, a computer, an air conditioner, a heater, an electric bulb, a printer, and the like. There may be many such offices in the given area, wherein said offices are used in a similar manner. The non-peak hours may be from 6 p.m. up to 9 a.m. on weekdays and 24 hours on weekends (i.e., be Saturday and Sunday), when the office is not in use. The peak hours may be from 9 a.m. to 6 p.m. on weekdays.

Optionally, the term *"transfer price"* refers to a price paid by the user for withdrawing energy from the at least one second energy source. There is no corresponding transfer price while transferring energy produced by the at least one first energy source within the premises, to the at least one second energy source.

In one exemplary scenario, the spot price of electricity at the given time is greater than the predefined transfer price of electricity at the given time. Herein, the spot price of electricity at the given time may be greater than twice of the predefined transfer price of electricity at the given time. In a first example, the transfer price of electricity may be 10c/Kwh per unit (for example, such as kilowatt) and the spot price may be 25c/Kwh per unit. A corresponding criterion is that the amount of energy consumed at the given time be minimized and the excess energy be transferred to the at least one second energy source, since purchasing energy from the at least one second energy source is expensive. Purchasing the energy from the at least one second energy source is expensive (i.e., the spot price of electricity is high) when a demand for energy is high (i.e., during peak hours). A technical effect of said criterion is that the excess energy available at the premises is not wasted. Instead, when the excess energy is transferred to the at least one second energy source, said energy source utilizes the excess energy by providing the excess energy to other load(s) at other premises that require energy. This would be a beneficial solution to meet high energy demand in a given area. Minimising each premises' energy consumption at a time of high energy demand would eventually lower said demand. Continuing the first example, the amount of energy consumed at the given time may be 0,5 units wherein loads A, B, C and D consume 0,1 units, 0,1 units, 0,15 units and 0,15 units, respectively. Therefore, the controller may switch off the loads A and D to reduce the amount of energy consumed at the given time by 0,25 units since costs for purchasing this energy according to the spot price of electricity and the transfer price of electricity would have been €8,75 (i.e., 0,25 units ^{∗} (€0,25 per unit+€0,1 per unit)) whereas the user may be compensated for transferring this energy according to the spot price of electricity at €6,25 (i.e., 0,25 units ^{∗} €0,25 per unit).

In another exemplary scenario, the spot price of electricity at another given time is greater than the transfer price of electricity at the given time. In a second example, the transfer price of electricity may be €10 per unit and the spot price may be €12 per unit. A corresponding criterion is that the excess energy is used for consumption by the at least one load so as to nullify or minimize a requirement of spot-priced energy, since purchasing energy from the at least one second energy source is slightly more expensive than transferring the excess energy to the at least one second energy source. The excess energy is utilized by the at least one load so as to not withdraw the energy from the at least one second energy source. Optionally, real-time production of the at least one first energy source may be increased so as to avoid withdrawal of spot-priced energy from the at least one second energy source at another time. Herein, the term *"another given time"* may be any of: an earlier given time, a later given time, than the given time. For instance, the spot price of electricity at a given time may be expensive. It may be known that the spot price of electricity may be cheap at an earlier given time or at a later given time. A difference between the spot price when it is expensive at the given time and the spot price when it is cheaper at another given time may be greater than the transfer price of the electricity. Hence, real-time consumption of energy from the at least one second energy source may be shifted according to the spot price of electricity at another given time. Herein, the real-time withdrawal of energy from the at least one second energy source may be done according to at least one of: a fixed price purchase agreement, a spot price purchase agreement. Hence, the spot-priced energy is replaced by the energy produced by the at least one first energy source. This scenario may occur when a demand for energy is normal. A technical effect of said criterion is that the excess energy available at the premises is utilized by the at least one load within the premises itself. This would be a beneficial solution as energy management costs are minimized. Continuing the second example, the amount of energy consumed at the given time may be 50 units wherein loads A, B, and C consume 10 units, 10 units, 15 units, and 15 units, respectively. Costs of purchasing 50 units of energy would have been €1100(i.e., 50 units ^{∗} (€12 per unit+€10 per unit)) and the user may be compensated for transferring the excess energy according to the spot price of electricity, at €600 (i.e., 50 units ^{∗} 12 per unit). Hence, the excess energy is consumed within the premises and to withdrawal of energy from the at least one second energy source is minimized.

In yet another exemplary scenario, the spot price of electricity is negative. In a third example, the transfer price of electricity may be €5 per unit and the spot price may be -€2 per unit. The spot price of electricity is negative when energy demand is low. This happens when energy requirements of the at least one load are minimal, the at least one first energy source is able to meet the energy requirements within the premises, during non-peak hours, and the like. Hence, a need to withdraw energy from the at least one second energy source is reduced. Resultantly, there is surplus energy available at the at least one second energy source as said energy source continues to produce energy. A corresponding criterion is to use the excess energy for consumption by the at least one load so as to maximize the amount of energy consumed at the given time such that the excess energy is un-transferred or minimally-transferred to the at least one second energy source, since transferring the excess energy to the at least one second energy source is expensive. A technical effect of said criterion is that excess energy available within the premises is managed to preferably meet energy requirements of all load(s) available within the premises and is not transferred at high costs to the at least one second energy source. Optionally, the at least one load may be switched on by the controller at the given time when the spot price of electricity is negative even when said load is scheduled to function at a later time, so as to fully utilize the excess energy available. Referring to the third example, the amount of energy consumed at the given time is 50 units wherein loads A, B, C, and D consume 10 units, 10 units, 15 units, and 15 units, respectively. When an excess energy of 25 units is available within the premises, costs of transferring the excess energy at the spot price would have been €50 (i.e., 25 units ^{∗} -€2 per unit) to be given by the user. Therefore, the excess energy of 25 units is consumed by the at least one load within the premises, for example, the controller switches on loads E and F to maximize consumption.

Optionally, the amount of energy consumed at the given time can be maximized by at least one of: regulating temperature of a given space in the premises by ±2 degrees Celsius than the required temperature at the given time, switching on the at least one load during non-peak hours, keeping the at least one load switched on for a greater time period than required.

In yet another exemplary scenario, the total price of electricity is negative. When the total price of electricity is negative, total price is paid to the user (for example, by adjustment in an electricity bill of the premises) withdraw energy from the at least one second energy source. Herein, the total price of electricity is equal to a sum of spot price of electricity at the given time, the transfer price of electricity at the given time and taxes levied by any government agency. In a fourth example, the transfer price of electricity may be €5 per unit, the spot price may be -€10 per unit, and the taxes may be €2 per unit. Hence, the total price of electricity is -€3 per unit. A corresponding criterion is to control the at least one first energy source to minimize the amount of energy produced by the at least one first energy source, since costs of transferring the excess energy are much higher than the costs of purchasing energy from the at least one second energy source. The total price is negative when a demand for energy is negligible (for example, during the non-peak hours). A technical effect of said criterion is that excess energy is not produced within the premises so as to minimize transfer costs. Instead, the energy required to meet energy requirements of the at least one load is withdrawn from the at least one second energy source since the total price of electricity is negative. This would be a beneficial solution to fulfil energy requirements of the premises at a profit. Continuing the fourth example, the amount of energy consumed at the given time is 50 units wherein loads A, B, C and D consume 10 units, 10 units, 15 units, and 15 units, respectively. In case an excess energy of 20 units were to be transferred to the at least one second energy source, costs of transferring excess energy to the at least one second energy source at the spot price of electricity would have been -€200 (20 units ^{∗}-€10 per unit), the negative cost meaning that it is payable by the user. However, if the at least one first energy source is controlled to minimize amount of energy produced within the premises, and the required energy of 50 units is withdrawn from the at least one second energy source for consumption of loads, costs for withdrawing energy would be €150 (50 units ^{∗}-€3 per unit), the negative cost meaning that it is payable to the user. Therefore, it is beneficial to withdraw energy from the at least one second energy source and minimize production of energy by the at least one first energy source.

In yet another exemplary scenario, the priority order is utilized to use the excess energy for consumption by the at least one load. The priority order may be user-defined, be pre-defined by the system according to requirements of the user, learnt by the system from historical energy usage data, and the like. For example, the priority order may be: a water heating unit, an under-floor heater for room 1, an under-floor heater for room 2, an electrical radiator. Here, the water heating unit has highest priority, followed by the under-floor heater for room 1, and so on, until the electrical radiator which has least priority. Hence, the excess energy is available, firstly the water heating unit will consume at least a portion of the excess energy. Subsequently, any remaining amount of excess energy will be consumed partly or entirely by the under-floor heater for room 1, and then be consumed by the under-floor heater for room 2, or the electrical radiator in a sequential order.

Optionally, the use of the excess energy for consumption by the at least one load is performed based on at least one factor, the at least one factor being at least one of:
- the amount of the excess energy that is produced at the given time;
- an energy storage capacity of a given load at the given time;
- an energy consumption capacity of a given load at the given time;
- energy requirements for providing a required temperature in a given region of the premises at a later time than the given time;
- a limit of a thermostat associated with a given load;
- a time selected for energy consumption by a given load;
- a time period required for energy consumption by a given load;
- the priority order.

In this regard, a technical effect of the at least one factor is to utilize the excess energy for the at least one load judiciously, so that a given load is not overburdened (or damaged) with the excess energy, energy requirements in the premises are met effectively, and the excess energy is not wasted. A manner in which each of the above-mentioned factors affect the use of the excess energy for consumption by the at least one load is described hereinbelow.

Optionally, the use of the excess energy for consumption by the at least one load is performed based on the amount of the excess energy that is available within the premises at the given time. This helps to determine number of loads to be switched on by the controller. For example, the amount of the excess energy available at the premises at the given time may be 1 kW. Hence the excess energy may be used by 1 load requiring 1kW. When the amount of the excess energy increases to 2 kW, the excess energy may be used by 3 loads requiring a total energy of 2kW.

Optionally, the use of the excess energy for consumption by the at least one load is performed based on the energy storage capacity of a given load at the given time. The energy storage capacity ensures usage of energy at a later time. When there is low energy storage capacity of the given load at the given time, the given load will dispense less amount of energy for consumption by the at least one load at the later time, and the controller may even be required to switch off a required number of loads to reduce consumption of energy. Alternatively, when the energy storage capacity of the given load at the given time is high, the controller may switch on a required number of loads to consume the energy at the later time. Optionally, when the excess energy is more than half of energy storage capacity of the given load at the given time, the given load consumes the excess energy.

For example, the energy storage capacity of an electric car battery may be 8 kW but the amount of the excess energy available may be 10 kW.

Since the electric car battery will not be able to store more than 8 kW of energy, other load(s) could be switched on or used to consume a remaining 2 kW of the excess energy.

Optionally, the use of the excess energy for consumption by the at least one load is performed based on the energy consumption capacity of a given load at the given time. The energy consumption capacity is an amount of energy that can be consumed by the at least one load so as toto function efficiently. The energy consumption capacity of a given load may increase or decrease based on usage of the given load over time.

For example, an amount of the excess energy available within the premises may be 2 kW. An electrical radiator may require a total energy of 2 kW, and has already consumed 10 kW. Hence, the excess energy of 1 kW may be consumed by the electrical radiator. Subsequently, remaining amount of the excess energy (i.e., 2 kW - 1 kW = 1 kW) is utilized by other load(s).

Optionally, the use of the excess energy for consumption by the at least one load is performed based on the energy requirements for providing the required temperature in a given region of the premises at a later time than the given time. The energy requirements to provide the required temperature are fulfilled at the later time, since a current temperature of the given region cannot be regulated while receiving the total amount of energy. Hence, after determining the amount of the excess energy available within the premises, a required amount of the excess energy is allocated to provide the required temperature in the given region at the later time. When required temperature of the given region is same as external temperature of the premises, energy requirement to regulate the current temperature in the given region is less. Hence, when excess energy would be available within the premises, the excess energy will be utilised by other load(s) instead of the given region.

For example, the total amount of energy consumed at the given time may be 5 kW wherein heat sources A and B consume 3 kW and 2 kW, respectively. The heat sources A and B are placed in rooms 1 and 2, respectively. The heat sources A and B require 2kW and 2,5 kW additionally, respectively, to be able to provide the required temperature to rooms A and B, respectively. When excess energy of 5,5 kW is available within the premises, the excess energy is provided to the heat sources A and B at the later time, to provide the required temperature to the rooms A and B, respectively.

Optionally, the use of the excess energy for consumption by the at least one load is performed based on the limit of the thermostat associated with the given load. The thermostat is a regulating device which senses temperature of a given region and is configured to regulate the current temperature of the given region. The thermostat is communicably coupled to the at least one load to enable regulation of the current temperature. The regulation of the current temperature is allowed within the limit of the thermostat, even if excess energy were to be supplied to the given load. Herein, the limit of the thermostat is a fixed range of temperature within which the temperature of the given region of the premises can be controlled. For example, the limit of the thermostat may range from 15 degrees Celsius up to 30 degrees Celsius.

Optionally, the use of the excess energy for consumption by the at least one load is performed based on the time selected for energy consumption by the given load. The time selected may be a given time instance, a given time period, or a given time interval. The at least one load consumes the excess energy only on the time selected (for example, such as a particular time instance), otherwise the excess energy is utilised by the other load(s). The time may be selected manually, automatically, or a combination of both. The controller switches on a given load specifically at the time selected to consume the excess energy. A technical effect is that the excess energy is utilized by other load(s), in case the excess energy is available before or after the selected time. For example, an electric car battery is scheduled to charge for a time period of 3 hours, between 3 a.m. to 6 a.m. When the excess energy is available at 8 p.m., the excess energy will be utilised by other load(s) instead of the electric car battery.

Optionally, the use of the excess energy for consumption by the at least one load is performed based on the time period required for energy consumption by the given load. The time period may be known previously or in real-time. The time period may be selected manually, automatically or a combination of both. The time period required by the given load to consume the excess energy is used to determine a time during which the excess energy is required to be available within the premises. Hence, the excess energy is not utilized by other load(s) when the given load is still consuming the excess energy. In case, an amount of excess energy still remains after the time period, the amount of excess energy is utilized by other load(s) available within the premises.

For example, a time period required for energy consumption by a water boiler may be 3 hours to heat water present inside the water boiler up to a required temperature. When excess energy is available within the premises, the water boiler will take 3 hours to consume the excess energy to heat the water up to the required temperature.

Optionally, the use of the excess energy for consumption by the at least one load is performed based on the priority order. Herein, loads in the priority order are arranged in a decreasing order of priority, which helps to decide an order in which the excess energy is to be managed. For example, a priority order may be: load A, load B, and load C. When the excess energy is available within the premises, the excess energy is firstly consumed by the load A, secondly by the load B, and lastly by the load C.

Optionally, the energy requirements for providing the required temperature in the given region of the premises at the later time than the given time depend on at least one of:
- a temperature of the given region of the premises at the given time;
- a weather forecast for a geolocation of the premises;
- environmental conditions at a geolocation of the premises;
- a floor plan of the premises;
- a number of the at least one load;
- a position of the at least one load within the premises.

In this regard, a technical effect is that the energy consumed at the given time is able to provide required temperature within the premises at the later time, after duly considering abovementioned factors. A manner in which each of these affect the energy requirements for providing the required temperature in the given region of the premises at the later time than the given time is described hereinbelow.

Optionally, the energy requirements for providing the required temperature in the given region of the premises at the later time than the given time depends on the temperature of the given region of the premises at the given time. In an instance when the temperature of the given region at the given time is already at the required temperature, excess energy is not consumed. Alternatively, in another instance, when the temperature of the given region at the given time is at a different temperature than the required temperature, energy is consumed to provide the required temperature.

For example, a temperature of a given region at a given time may be 5 degrees Celsius. The given region is within the premises and comprises rooms A and B, with a required temperature of 20 degrees Celsius and 30 degrees Celsius, respectively. The rooms A and B have similarly configured heat sources in the respective rooms. The heat source in room B has a higher energy requirement than the heat source in room A to provide their respective required temperatures at the given time.

Optionally, the energy requirements for providing the required temperature in the given region of the premises at the later time than the given time depends on weather forecast for a geolocation of the premises. The energy requirements for providing the required temperature can be predicted according to the weather forecast so as to manage the excess energy accordingly. The weather forecast varies from region to region. The geolocation is an exact physical location of the premises. The geolocation provides a latitude and a longitude of the premises.

For example, the weather forecast for a given region may include a prediction that a maximum temperature during a day would be 39 degrees Celsius. The required temperature in the given region of the premises is to be 25 degrees Celsius. Hence, the energy requirement of the at least one load is adjusted accordingly so as to cool the given region and provide the required temperature.

Optionally, the energy requirements for providing the required temperature in the given region of the premises at the later time than the given time depends on environmental conditions at a geolocation of the premises. The environmental conditions at the geolocation of the premises are determined at the given time. The term *"environmental conditions"* refers to a state of an environment at the geolocation of the premises. This helps to calculate the energy requirements to be provided at the later time.

For example, the environmental condition at the geolocation of the premises is windy. The required temperature may be 20 degrees Celsius. Previously, a controller was configured to switch on a cooler at a time selected, which corresponds to the time of the environmental condition at the geolocation of the premises. However, as the environmental condition is windy, current temperature has already at the required temperature. Hence, the excess energy is not consumed by the cooler at the selected time.

Optionally, the energy requirements for providing the required temperature in the given region of the premises at the later time than the given time depends on the floor plan of the premises. The floor plan is a technical drawing drawn to scale, showing relationships between rooms, spaces, and other physical features of one level of the premises. The temperature across the premises varies greatly and is affected by at least one physical feature, wherein the at least one physical feature is at least one of: a fixed window, a casement window, an interior door inside the premises, an exterior door of the premises, a ventilation unit. The energy requirements to provide the required temperature is also affected by a size of the given region.

For example, the required temperature of room A, B, C, and D may be 20 degrees Celsius 18 degrees Celsius, 18 degrees Celsius, and 17 degrees Celsius, respectively, at a given time. A current temperature of the rooms A-D may be 30 degrees Celsius. 32 degrees Celsius. 28 degrees Celsius. and 35 degrees Celsius, respectively. The room A has three casement windows, the room B has one casement window with two internal doors, room C has one casement window with one internal door, and room D has only one casement window. Herein, the casement windows allow external temperature of the premises to regulate the rooms A-D. The external temperature of the premises may be 20 degrees Celsius. The room A is bigger in size than the rooms B-D, the room B is bigger in size than the rooms C-D, and the room C is bigger in size than the room D. Hence, the room A reaches the required temperature faster than the rooms B-D, followed by the room B, followed by the room C, and followed by the room D.

Optionally, the energy requirements for providing the required temperature in the given region of the premises at the later time than the given time depends on the number of the at least one load. In case a given room requires more heat as compared to another room within the premises, more heat sources will be arranged in the given room as compared to the other room. Hence, energy requirement to provide the required temperature in the given room will be higher than in the other room. A technical effect is that the energy is managed according to the required temperature to be provided by the at least one load.

For example, a premises comprises rooms A and B. The room A has three electrical radiators and the room B has 1 electrical radiator. In a situation, when all the electrical radiators are switched on by the controller, energy requirement of the room A will be higher than that of room B, as number of loads in room A is greater than the number of loads in room B.

Optionally, the energy requirements for providing the required temperature in the given region of the premises at the later time than the given time depends on the position of the at least one load. This is because the temperature of the room varies across a given region within the premises and is not uniform. The load must be positioned in such a way so as to provide the required temperature in the given region uniformly.

For example, a given region may comprise of hot spots and cold spots. The hot spots may be around a window, wherein an area immediately near the window is receiving enough sunlight to raise temperature of the hot spot to 25 degrees Celsius. The cold spot may be an area farthest from the window, and has a temperature of 20 degrees Celsius. The required temperature of the given region is 35 degrees Celsius. Herein, energy requirement will be low when an electrical radiator is placed in the hot spot in the given region than when the electrical radiator is placed in the cold spot in the given region.

Optionally, the priority order includes a transfer point at which the excess energy is transferred to the at least one second energy source, the transfer point having a given priority value, wherein when a load has a priority value that is lesser than the given priority value, the excess energy is not used for consumption by the load. The transfer point may be a fixed point or may be selected (by the user or the system) dynamically. The given priority value may be dynamically selected in a manual manner, in an automatic manner or as a combination of both. The priority value of the at least one load in the priority order indicates when the at least one load will receive the excess energy. Priority values may be numeric (for example, between 0 and 1, between 0 and 10, between 0 and 100, and the like), alphanumeric (such as P1, P2, P3, and similar), alphabetical (such as P, Q, R, S, T, and similar), and the like. The excess energy is transferred to the at least one second energy source when the controller encounters the transfer point.

For example, when the premises has excess energy, the excess energy is managed according to the priority order. As an example, the priority order, in decreasing order of priority, is: load A, load B, load C, a transfer point, load D. The excess energy is to be distributed (based on its amount) firstly to the load A, then to the load B, then to the load C, and finally to the at least one second energy source. The load D will not receive the excess energy since the at least one second energy source can receive large amounts of energy.

Optionally, the user device is communicably coupled to the controller, wherein the controller is further configured to provide, on a display of the user device, an interactive user interface for enabling the user associated with the user device to provide an input and/or to view an output. The input may be at least one of: a number of loads, priority order, time selected for energy consumption by a given load, time period required for energy consumption by a given load, and the like. The output may be at least one of: an amount of excess energy, a spot price of electricity, a transfer price of electricity, a total price of electricity, an amount of energy consumed by the at least one load, and the like. The term *"user device"* relates to an electronic device that is capable of displaying an interactive user interface. The user device is associated with (or used by) the user, and is capable of enabling the user to perform specific tasks associated with the method. Furthermore, the user device is intended to be broadly interpreted to include any electronic device that may be used to facilitate interaction of the person using it with the system. This interaction may be facilitated by one or more of a touch-sensitive display of the user device, buttons on the user device, microphone on the user device, or similar. Examples of user device include, but are not limited to, a touch screen television (TV), tablets, laptop computers, personal computers, cellular phones, personal digital assistants (PDAs), handheld devices, etc. Additionally, the user device includes a casing, a memory, a processor, a network interface card, a microphone, a speaker, a keypad.

The interactive user interface is operable to interact with the user to convey graphical and/or textual information and receive input from the user. Furthermore, the interactive user interface elements refer to visual objects that have a size and position in the interactive user interface, and serve as a means of interacting with a person with respect to deciding the priority order, or to add or remove the at least one load.

Optionally, a data repository is communicably coupled to the controller, wherein the controller is further configured to store, at the data repository, at least one of: the first measurement data, the second measurement data, a historical record of excess energy produced over a historical time period, information indicative of the amount of the excess energy that is produced at the given time. Throughout the present disclosure, the term *"data repository"* refers to hardware, software, firmware, or a combination of these for storing a given information in an organized (namely, structured) manner, thereby, allowing for easy storage, access (namely, retrieval), updating and analysis of the given information. The data repository may be implemented as a memory of a device (such as the imaging system, the display apparatus, or similar), a removable memory, a cloud-based database, or similar. The data repository can be implemented as one or more storage devices. A technical effect of using the data repository is that is provides an ease of storage and access of processing inputs, as well as processing outputs. The data repository allows the user or the controller to access any information present in the data repository, when a current information is not available at the given time.

For example, the priority order of the at least one load in the premises may be set, at the data repository, daily using internet connectivity. However, when the internet connectivity may be lost (for example, due to a bad weather condition), then a weekly usage schedule of the at least one load that may be present in the data repository may be accessed instead. As a result, the excess energy is utilised according to settings present in the weekly usage schedule. Once the internet connectivity is restored, the system checks the priority order and applies changes wherever applicable.

Optionally, at least one temperature sensor is arranged at the premises, the temperature sensor being configured to generate sensor data indicative of a temperature in its vicinity and to send the sensor data to the controller. The at least one temperature sensor measures temperature of the vicinity and converts said measurement into the sensor data to record, monitor, or signal any changes in the temperature. The sensor data is generated terms of Fahrenheit, Celsius, Centigrade, and the like. The at least one temperature sensor generates the sensor data indicative of the temperature of the given region of the premises at the given time to determine energy requirements for providing the required temperature in the given region of the premises. Subsequently, after determining the energy requirements, the excess energy can be utilized accordingly. The energy requirements vary according to temperature in the given region of the premises. Examples of the at least one temperature sensor may include, but is not limited to, a thermocouple, a thermistor, a resistance temperature detector (RTD), and the like. The position of the at least one temperature sensor may be at least one of: inside the premises, outside the premises, in the hot spot in the given region of the premises, in the cold spot in the given region of the premises, in proximity of the at least one load used to regulate the temperature of the given region. Optionally, the position of at least one temperature sensor is determined during installation of said temperature sensor.

For example, a temperature sensor may be placed near a window in a room. The window enables sunlight to come through the window and the temperature sensor may sense a higher temperature than an actual temperature of the given region, thereby providing inaccurate sensor data. The excess energy would have been mis-managed according to the inaccurate sensor data. Instead, when the temperature sensor may be placed at a location which has a current temperature based on which the temperature of the room will be based, thereby generating an accurate sensor data. Hence, the excess energy is managed according to the accurate sensor data.

The present disclosure also relates to the method as described above. Various embodiments and variants disclosed above apply *mutatis mutandis* to the method.

Optionally, the at least one criterion is at least one of:
- when a spot price of electricity at the given time is greater than twice of a transfer price of electricity at the given time, minimizing the amount of energy consumed at the given time and transferring the excess energy to the at least one second energy source;
- when a spot price of electricity at the given time is greater than a transfer price of electricity at the given time, using the excess energy for consumption by the at least one load so as to nullify or minimize a requirement of spot-priced energy;
- when a spot price of electricity is negative, using the excess energy for consumption by the at least one load so as to maximize the amount of energy consumed at the given time such that the excess energy is un-transferred or minimally-transferred to the at least one second energy source;
- when a total price of electricity is negative, controlling the at least one first energy source to minimize the amount of energy produced by the at least one first energy source;
- when at a given time compared to an earlier or later given time the received price of electricity transferred to the at least one second energy (216) source is higher than that of the transfer price, then minimize the amount of energy consumed and maximize transfer to the at least one second energy source (216);
- utilizing a priority order to use the excess energy for consumption by the at least one load, wherein the priority order is an order of decreasing priorities in which the excess energy is to at least be consumed by the at least one load.

Optionally, the step of using the excess energy for consumption by the at least one load is performed based on at least one factor, the at least one factor being at least one of:
- the amount of the excess energy that is produced at the given time;
- an energy storage capacity of a given load at the given time;
- an energy consumption capacity of a given load at the given time;
- energy requirements for providing a required temperature in a given region of the premises at a later time than the given time;
- a limit of a thermostat associated with a given load;
- a time selected for energy consumption by a given load;
- a time period required for energy consumption by a given load;
- the priority order.

The present disclosure also relates to the computer program product as described above. Various embodiments and variants disclosed above apply *mutatis mutandis* to the computer program product.

The computer program product for managing energy at a premises, the computer program product comprising a non-transitory machine-readable data storage medium having stored thereon program instructions that, when accessed by a processing device, cause the processing device to execute steps of the aforementioned method. The term *"computer program product"* refers to a software product comprising program instructions that are recorded on the non-transitory machine-readable data storage medium, wherein the software product is executable upon a computing hardware for implementing the aforementioned steps of the method for managing energy at a premises.

In an embodiment, the non-transitory machine-readable date storage medium can direct a machine (such as computer, other programmable data processing apparatus, or other devices) to function in a particular manner, such that the program instructions stored in the non-transitory machine-readable data storage medium case a series of steps to implement the function specified in a flowchart corresponding to the instructions. Examples of the non-transitory machine-readable data storage medium includes, but is not limited to, an electronic storage device, a magnetic storage device, an optical storage device, an electromagnetic storage device, a semiconductor storage device, a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, or any suitable combination thereof.

### DETAILED DESCRIPTION OF THE DRAWINGS

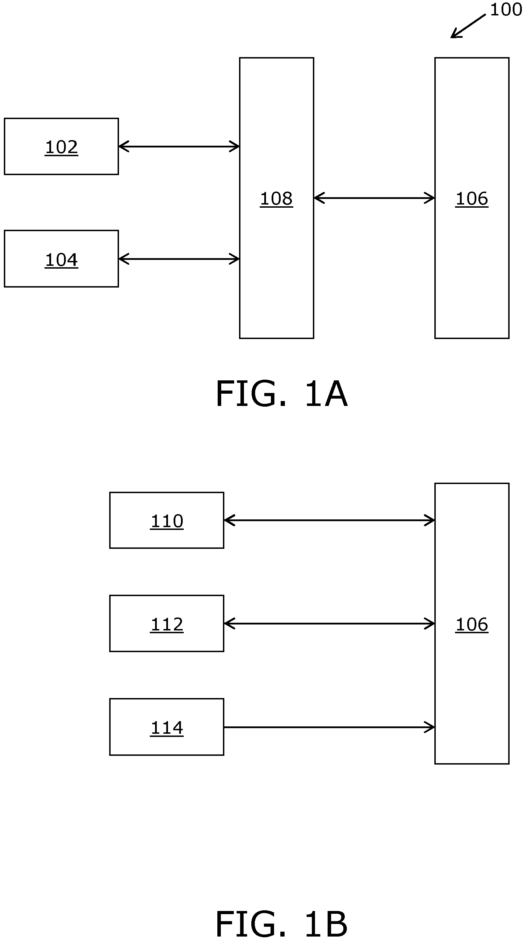

Referring to FIGs. 1A and 1B, there are shown block diagrams of a system **100** for managing energy at a premises, in accordance with different embodiments of the present disclosure. In FIGs. 1A and 1B, the system **100** comprises at least one first device (depicted as a first device **102**), at least one second device **104**, and a controller **106**. The controller **106** is communicably coupled to the at least one first device **102**, and the at least one second device **104** via at least one transceiver **108**. Additionally, in FIG. 1B, the system **100** further comprises a user device **110,** a data repository **112**, and at least one temperature sensor (depicted as a temperature sensor **114**). The user device **110**, the data repository **112** and the at least one temperature sensor **114** are communicably coupled to the controller **106**. The at least one temperature sensor **114** sends sensor data to the controller **106**.

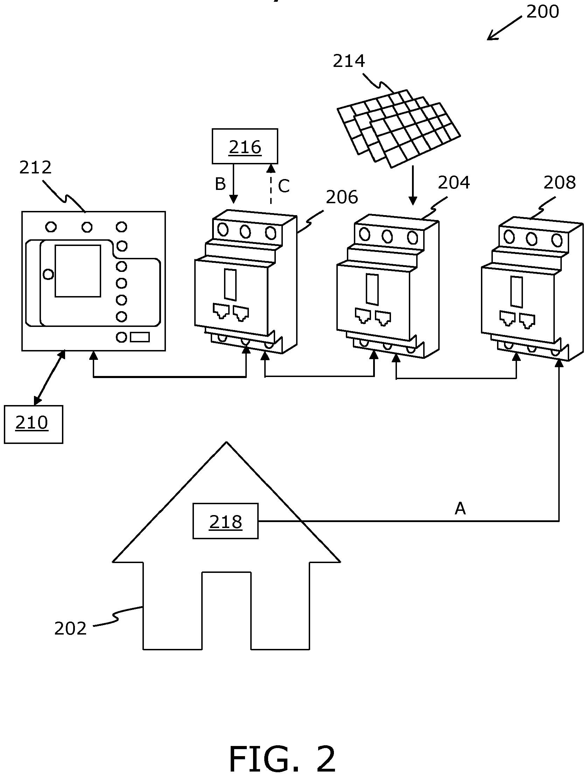

Referring to FIG. 2, there is shown a schematic illustration of an exemplary system **200** for managing energy at a premises **202**, in accordance with an embodiment of the present disclosure. Herein, the exemplary system **200** comprises at least one first device (depicted as a first device **204**), at least one second device (depicted as a second device **206**), at least one third device (depicted as a third device **208**), a controller **210**, and a transceiver **212**. The controller **210** is communicably coupled to the at least one first device **204**, the at least one second device **206** and the at least one third device **208**, via the transceiver **212.** The at least one first device **204,** the at least one second device **206** and the at least one third device **208** may be energy meters. The at least one first device **204** is configured to generate first measurement data indicative of real-time production of energy by at least one first energy source **214.** As shown, for example, the at least one first energy source **214** may be a solar module. The at least one second device **206** is configured to generate second measurement data indicative of real-time withdrawal of energy from at least one second energy source **216.** For example, the at least one second energy source **216** may be at least one power grid. The at least one first device **204** and the at least one second device **206** is configured to generate usage data indicative of real-time consumption of energy (as indicated by solid arrow **A**) by at least one load (depicted as a load **218).** The at least one load **218** is arranged within the premises **202.** When overproduction of energy occurs within the premises **202,** the excess energy is managed according to at least one criterion. Herein, depending on the at least one criterion, energy can be withdrawn from the at least one second energy source **216** (as indicated by solid arrow **B**) or can be transferred to the at least one second energy source **216** (as indicated by dashed arrow **C**). The at least one third device **208** may be used to generate the usage data when the at least one second device **206** measures the amount of energy withdrawn, or the amount of energy transferred, from/to the at least one second energy source **216** in real time, over a period of time.

FIG. 2 is merely an example, which should not unduly limit the scope of the claims herein. A person skilled in the art will recognize many variations, alternatives, and modifications of embodiments of the present disclosure.

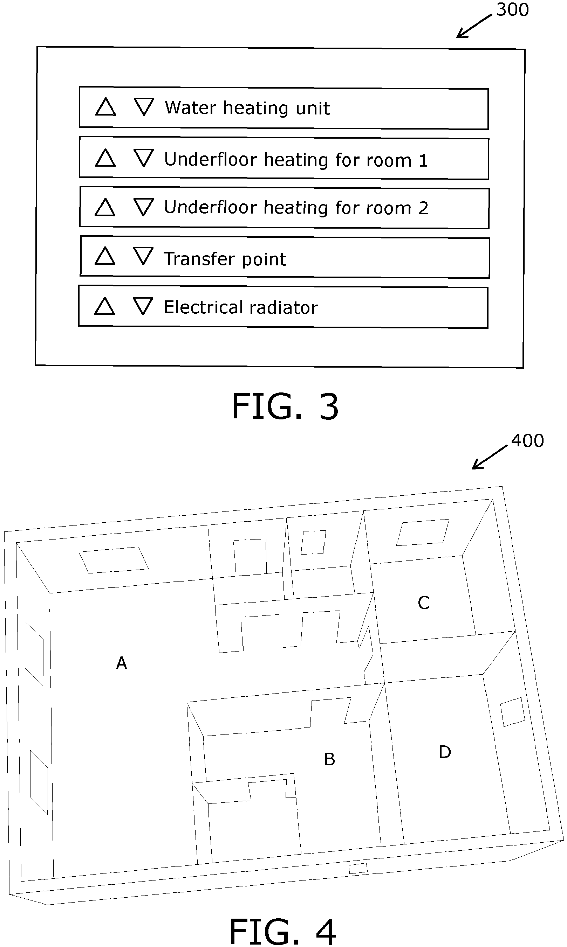

Referring to FIG. 3, there is shown an exemplary priority order **300** for use of excess energy for consumption by at least one load, in accordance with an embodiment of the present disclosure. For example, as shown, the at least one load may be a water heating unit, an under-floor heater for room 1, an under-floor heater for room 2, and an electrical radiator. The exemplary priority order **300** is an order of decreasing priorities in which the excess energy is to at least be consumed by the at least one load. The at least one load have their respective priority values. As shown, a priority value of the water heating unit is more than a priority value of the under-floor heater for room 1. Subsequently, the priority value of the underfloor heater for room 1 is of a higher value than a priority value of the underfloor heater for room 2. Subsequently, the priority value of the underfloor heater of room 2 is higher than a priority value of a transfer point. The priority value of the transfer point is higher than a priority value of the electrical radiator. The exemplary priority order **300** includes the transfer point at which the excess energy is transferred to at least one second energy source. Since the electrical radiator, has a priority value that is lesser than the given priority value, the excess energy is not used for consumption by the load.

FIG. 3 is merely an example, which should not unduly limit the scope of the claims herein. A person skilled in the art will recognize many variations, alternatives, and modifications of embodiments of the present disclosure.

Referring to FIG. 4, there is shown an exemplary floor plan **400** of a premises, in accordance with an embodiment of the present disclosure. The floor plan **400** shows that the premises is divided into four rooms, depicted as room A, room B, room C, and room D. A required temperature in the four rooms A-D may be regulated separately with consideration of how and when each room is used at different times of a day and week. The external temperature depends on at least one of: a temperature of a given region of the premises **404** at the given time, a weather forecast for a geolocation of the premises **404,** environmental conditions at a geolocation of the premises **404.** Furthermore, the rooms A-D may be affected by an external temperature. A temperature in the four rooms A-D may further be regulated to reach the required temperature by at least physical feature, wherein the external temperature is communicated via the at least physical feature. The at least one outlet may be at least one of: a fixed window, a casement window, an interior door within the rooms A-D of the premises, an exterior door of the premises, a ventilation unit. The required temperature may also be affected by size of the room. For instance, the required temperature of room A may be 20 degrees Celsius, the required temperature of room B and room C may be 18 degrees Celsius, and the required temperature of room D may be 17 degrees Celsius, at a given time of a given day. A current temperature of the rooms A-D may be 30 degrees Celsius. 32 degrees Celsius. 28 degrees Celsius. and 35 degrees Celsius, respectively. The room A has three casement windows, the room B has one casement window with two internal doors, room C has one casement window with one internal door, and room D has only one casement window. Herein, the casement windows allow external temperature of the premises to regulate the rooms A-D. The external temperature of the premises may be 20 degrees Celsius. Furthermore, room A is bigger in size than the rooms B-D, the room B is bigger in size than the rooms C-D, and the room C is bigger in size than the room D. Hence, the room A reaches the required temperature faster than the rooms B-D, followed by the room B, followed by the room C, and followed by the room D.

FIG. 4 is merely an example, which should not unduly limit the scope of the claims herein. A person skilled in the art will recognize many variations, alternatives, and modifications of embodiments of the present disclosure.

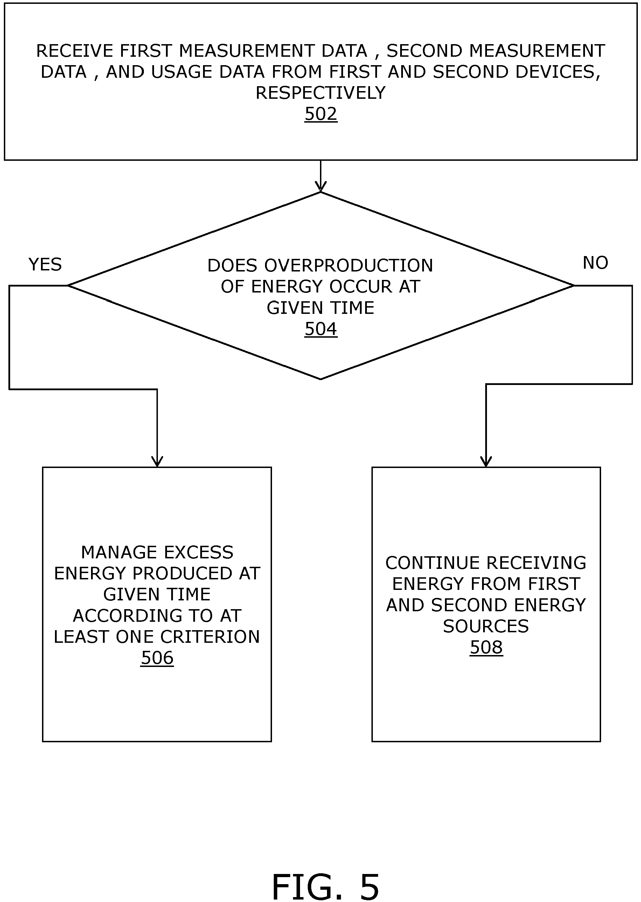

Referring to FIG. 5, there is shown an illustration of a flowchart depicting steps of a method for managing energy at a premises, in accordance with an embodiment of the present disclosure. At step **502,** a first measurement data is received from at least one first device, a second measurement data is received from at least one second device, and a usage data is received from the at least one first device and the at least one second device. The first measurement data is indicative of real-time production of energy by at least one first energy source, the second measurement data is indicative of real-time withdrawal of energy from at least one second energy source, and the usage data is indicative of real-time consumption of energy by at least one load. At step **504,** it is determined whether overproduction of energy occurs at a given time. At step **506,** when it is determined that the overproduction of energy occurs at the given time, excess energy produced at the given time is managed according to at least one criterion, wherein an amount of the excess energy is equal to said difference. Otherwise, at step **508,** when it is determined that the overproduction of energy does not occur at the given time, the at least one first device and the at least one second device continues to receive the first measurement data, the second measurement data and the usage data.

The aforementioned steps are only illustrative and other alternatives can also be provided where one or more steps are added, one or more steps are removed, or one or more steps are provided in a different sequence without departing from the scope of the claims herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A system (100, 200) for managing energy at a premises (202, 404), the system comprising:
at least one first device (102, 204) configured to generate first measurement data indicative of real-time production of energy by at least one first energy source (214);
at least one second device (104, 206) configured to generate second measurement data indicative of real-time withdrawal of energy from at least one second energy source (216);
the at least one first device (102, 204) and the at least one second device (104, 206) configured to generate usage data indicative of real-time consumption of energy by at least one load (218); and
a controller (106, 210) communicably coupled to the at least one first device (102, 204) and the at least one second device (104, 206) via at least one transceiver (108, 212), the controller being configured to:
- receive the first measurement data, the second measurement data, and the usage data from the at least one first device (102, 204) and the at least one second device (104, 206), respectively;
- determine whether overproduction of energy occurs at a given time; and
- when it is determined that the overproduction of energy occurs at the given time, manage excess energy that is produced at the given time according to at least one criterion, wherein an amount of the excess energy is equal to said difference.

2. A system (100, 200) according to claim 1, wherein the at least one criterion is at least one of:
- when a spot price of electricity at the given time is greater than a predefined transfer price of electricity at the given time, minimize the amount of energy consumed at the given time and transfer the excess energy to the at least one second energy source (216);
- when a spot price of electricity at another given time is greater than a transfer price of electricity, use the excess energy for consumption by the at least one load (218) so as to nullify or minimize a requirement of spot-priced energy;
- when a spot price of electricity is negative, use the excess energy for consumption by the at least one load (218) so as to maximize the amount of energy consumed at the given time such that the excess energy is un-transferred or minimally-transferred to the at least one second energy source (216);
- when a total price of electricity is negative, control the at least one first energy source (214) to minimize the amount of energy produced by the at least one first energy source;
- utilize a priority order (300) to use the excess energy for consumption by the at least one load (218), wherein the priority order is an order of decreasing priorities in which the excess energy is to at least be consumed by the at least one load.

3. A system (100, 200) according to claim 2, wherein the use of the excess energy for consumption by the at least one load (218) is performed based on at least one factor, the at least one factor being at least one of:
- the amount of the excess energy that is produced at the given time;
- an energy storage capacity of a given load at the given time;
- an energy consumption capacity of a given load at the given time;
- energy requirements for providing a required temperature in a given region of the premises (202, 404) at a later time than the given time;
- a limit of a thermostat associated with a given load;
- a time selected for energy consumption by a given load;
- a time period required for energy consumption by a given load;
- the priority order (300).

4. A system (100, 200) according to claim 3, wherein the energy requirements for providing the required temperature in the given region of the premises (202, 404) at the later time than the given time depend on at least one of:
- a temperature of the given region of the premises at the given time;
- a weather forecast for a geolocation of the premises;
- environmental conditions at a geolocation of the premises;
- a floor plan (400) of the premises;
- a number of the at least one load (218);
- a position of the at least one load (218) within the premises.

5. A system (100, 200) according to any of claims 2-4, wherein the priority order (300) includes a transfer point at which the excess energy is transferred to the at least one second energy source (216), the transfer point having a given priority value, wherein when a load has a priority value that is lesser than the given priority value, the excess energy is not used for consumption by the load.

6. A system (100, 200) according to any of the preceding claims, wherein a given device is implemented as an energy meter.

7. A system (100, 200) according to any of the preceding claims, wherein the at least one first energy source (214) is at least one of: a renewable energy source, a non-renewable energy source, and wherein the at least one second energy source (216) is at least one power grid.

8. A system (100, 200) according to any of the preceding claims, wherein the at least one load (218) is at least one of: an electrical radiator, a ceiling heater, an under-floor heater, a window heating system, a water heating unit, a trace heating unit, an air source heat pump, a cooler, an air conditioner, a battery of an electric car, a car heater, a ventilation unit, an energy storage means, a device which consumes energy faster than a natural rate of energy discharge.

9. A system (100, 200) according to any of the preceding claims, further comprising a user device (110) communicably coupled to the controller (106, 210), wherein the controller is further configured to provide, on a display of the user device, an interactive user interface for enabling a user associated with the user device to provide an input and/or to view an output.

10. A system (100, 200) according to any of the preceding claims, further comprising a data repository (112) communicably coupled to the controller (106, 210), wherein the controller is further configured to store, at the data repository, at least one of: the first measurement data, the second measurement data, a historical record of excess energy produced over a historical time period, information indicative of the amount of the excess energy that is produced at the given time.

11. A system (100, 200) according to any of the preceding claims, further comprising at least one temperature sensor (114) arranged at the premises (202, 404), the temperature sensor being configured to generate sensor data indicative of a temperature in its vicinity and to send the sensor data to the controller (106, 210).

12. A system (100, 200) according to any of the preceding claims, wherein the overproduction of energy at a given time is based on a difference between a total amount of energy received at the given time and an amount of energy consumed at the given time, wherein the total amount of energy received at the given time is equal to a sum of an amount of energy produced by the at least one first energy source (214) at the given time and an amount of energy withdrawn from the at least one second energy source (216) at the given time,
and wherein the amount of energy consumed at the given time is equal to a sum of an amount of energy flowing from the at least one first energy source to the at least one load via a first cut-off point and an amount of energy flowing from the at least one second energy source to the premises load via a second cut-off point.

13. A method for managing energy at a premises (202, 404), the method comprising:
- receiving a first measurement data from at least one first device (102, 204) and a second measurement data from at least one second device (104, 206), and a usage data from the at least one first device and the second device, wherein the first measurement data is indicative of real-time production of energy by at least one first energy source (214), the second measurement data is indicative of real-time withdrawal of energy from at least one second energy source (216), and the usage data is indicative of real-time consumption of energy by at least one load (218) ;
- determining whether overproduction of energy occurs at a given time; and
- when it is determined that the overproduction of energy occurs at the given time, managing excess energy that is produced at the given time according to at least one criterion, wherein an amount of the excess energy is equal to said difference.

14. A method according to claim 13, wherein the at least one criterion is at least one of:
- when at a given time compared to an earlier or later given time the received price of electricity transferred to the at least one second energy (216) source is higher than that of the transfer price, then minimize the amount of energy consumed and maximize transfer to the at least one second energy source (216);
- when a spot price of electricity at the given time is greater than a predefined transfer price of electricity at the given time, minimizing the amount of energy consumed at the given time and transferring the excess energy to the at least one second energy source (216);
- when a spot price of electricity at another given time is greater than a transfer price of electricity at the given time, using the excess energy for consumption by the at least one load (218) so as to nullify or minimize a requirement of spot-priced energy;
- when a spot price of electricity is negative, using the excess energy for consumption by the at least one load (218) so as to maximize the amount of energy consumed at the given time such that the excess energy is un-transferred or minimally-transferred to the at least one second energy source (216);
- when a total price of electricity is negative, controlling the at least one first energy source (214) to minimize the amount of energy produced by the at least one first energy source;
- utilizing a priority order (300) to use the excess energy for consumption by the at least one load (218), wherein the priority order is an order of decreasing priorities in which the excess energy is to at least be consumed by the at least one load.

15. A method according to claim 14, wherein the step of using the excess energy for consumption by the at least one load (218) is performed based on at least one factor, the at least one factor being at least one of:
- the amount of the excess energy that is produced at the given time;
- an energy storage capacity of a given load at the given time;
- an energy consumption capacity of a given load at the given time;
- energy requirements for providing a required temperature in a given region of the premises (202, 404) at a later time than the given time;
- a limit of a thermostat associated with a given load;
- a time selected for energy consumption by a given load;
- a time period required for energy consumption by a given load;
- the priority order (300).

16. A computer-program product for managing energy at a premises (202, 404), wherein the computer program product comprises a non-transitory machine-readable data storage medium having stored thereon program instructions that, when accessed by a processing device, cause the processing device to execute steps of a method of any of claims 13-15.

## Amended claims

### Amended claims in accordance with Rule 137(2) EPC.

1. A system (100, 200) for managing energy at a premises (202, 404), the system comprising:
at least one first device (102, 204) configured to generate first measurement data indicative of real-time production of energy by at least one first energy source (214);
at least one second device (104, 206) configured to generate second measurement data indicative of real-time withdrawal of energy from at least one second energy source (216);
the at least one first device (102, 204) and the at least one second device (104, 206) configured to generate usage data indicative of real-time consumption of energy by at least one load (218); and
a controller (106, 210) communicably coupled to the at least one first device (102, 204) and the at least one second device (104, 206) via at least one transceiver (108, 212), the controller being configured to:
- receive the first measurement data, the second measurement data, and the usage data from the at least one first device (102, 204) and the at least one second device (104, 206), respectively;
- determine whether overproduction of energy occurs at a given time, wherein the overproduction of energy at a given time is based on a difference between a total amount of energy received at the given time and an amount of energy consumed at the given time, wherein the total amount of energy received at the given time is equal to a sum of an amount of energy produced by the at least one first energy source (214) at the given time and an amount of energy withdrawn from the at least one second energy source (216) at the given time, and wherein the amount of energy consumed at the given time is equal to a sum of an amount of energy flowing from the at least one first energy source to the at least one load via a first cut-off point and an amount of energy flowing from the at least one second energy source to the premises load via a second cut-off point; and
- when it is determined that the overproduction of energy occurs at the given time, manage excess energy that is produced at the given time according to at least one criterion, wherein an amount of the excess energy is equal to the difference, wherein the at least one criterion is at least one of:
- when a spot price of electricity at the given time is greater than a predefined transfer price of electricity at the given time, minimize the amount of energy consumed at the given time and transfer the excess energy to the at least one second energy source (216);
- when a spot price of electricity at another given time is greater than a transfer price of electricity, use the excess energy for consumption by the at least one load (218) so as to nullify or minimize a requirement of spot-priced energy;
- when a spot price of electricity is negative, use the excess energy for consumption by the at least one load (218) so as to maximize the amount of energy consumed at the given time such that the excess energy is untransferred or minimally-transferred to the at least one second energy source (216);
- when a total price of electricity is negative, control the at least one first energy source (214) to minimize the amount of energy produced by the at least one first energy source, wherein the total price of electricity is a sum of spot price of electricity at the given time and the transfer price of electricity at the given time;
- utilize a priority order (300) to use the excess energy for consumption by the at least one load (218), wherein the priority order is an order of decreasing priorities in which the excess energy is to at least be consumed by the at least one load.

2. A system (100, 200) according to claim 1, wherein the use of the excess energy for consumption by the at least one load (218) is performed based on at least one factor, the at least one factor being at least one of:
- the amount of the excess energy that is produced at the given time;
- an energy storage capacity of a given load at the given time;
- an energy consumption capacity of a given load at the given time;
- energy requirements for providing a required temperature in a given region of the premises (202, 404) at a later time than the given time;
- a limit of a thermostat associated with a given load;
- a time selected for energy consumption by a given load;
- a time period required for energy consumption by a given load;
- the priority order (300).

3. A system (100, 200) according to claim 2, wherein the energy requirements for providing the required temperature in the given region of the premises (202, 404) at the later time than the given time depend on at least one of:
- a temperature of the given region of the premises at the given time;
- a weather forecast for a geolocation of the premises;
- environmental conditions at a geolocation of the premises;
- a floor plan (400) of the premises;
- a number of the at least one load (218);
- a position of the at least one load (218) within the premises.

4. A system (100, 200) according to any of claims 1-3, wherein the priority order (300) includes a transfer point at which the excess energy is transferred to the at least one second energy source (216), the transfer point having a given priority value, wherein when a load has a priority value that is lesser than the given priority value, the excess energy is not used for consumption by the load.

5. A system (100, 200) according to any of the preceding claims, wherein a given device is implemented as an energy meter.

6. A system (100, 200) according to any of the preceding claims, wherein the at least one first energy source (214) is at least one of: a renewable energy source, a non-renewable energy source, and wherein the at least one second energy source (216) is at least one power grid.

7. A system (100, 200) according to any of the preceding claims, wherein the at least one load (218) is at least one of: an electrical radiator, a ceiling heater, an under-floor heater, a window heating system, a water heating unit, a trace heating unit, an air source heat pump, a cooler, an air conditioner, a battery of an electric car, a car heater, a ventilation unit, an energy storage means, a device which consumes energy faster than a natural rate of energy discharge.

8. A system (100, 200) according to any of the preceding claims, further comprising a user device (110) communicably coupled to the controller (106, 210), wherein the controller is further configured to provide, on a display of the user device, an interactive user interface for enabling a user associated with the user device to provide an input and/or to view an output.

9. A system (100, 200) according to any of the preceding claims, further comprising a data repository (112) communicably coupled to the controller (106, 210), wherein the controller is further configured to store, at the data repository, at least one of: the first measurement data, the second measurement data, a historical record of excess energy produced over a historical time period, information indicative of the amount of the excess energy that is produced at the given time.

10. A system (100, 200) according to any of the preceding claims, further comprising at least one temperature sensor (114) arranged at the premises (202, 404), the temperature sensor being configured to generate sensor data indicative of a temperature in its vicinity and to send the sensor data to the controller (106, 210).

11. A method for managing energy at a premises (202, 404), the method comprising:
- receiving a first measurement data from at least one first device (102, 204) and a second measurement data from at least one second device (104, 206), and a usage data from the at least one first device and the second device, wherein the first measurement data is indicative of real-time production of energy by at least one first energy source (214), the second measurement data is indicative of real-time withdrawal of energy from at least one second energy source (216), and the usage data is indicative of real-time consumption of energy by at least one load (218);
- determining whether overproduction of energy occurs at a given time, wherein the overproduction of energy at a given time is based on a difference between a total amount of energy received at the given time and an amount of energy consumed at the given time, wherein the total amount of energy received at the given time is equal to a sum of an amount of energy produced by the at least one first energy source (214) at the given time and an amount of energy withdrawn from the at least one second energy source (216) at the given time, and wherein the amount of energy consumed at the given time is equal to a sum of an amount of energy flowing from the at least one first energy source to the at least one load via a first cut-off point and an amount of energy flowing from the at least one second energy source to the premises load via a second cut-off point; and
- when it is determined that the overproduction of energy occurs at the given time, managing excess energy that is produced at the given time according to at least one criterion, wherein an amount of the excess energy is equal to the difference, wherein the at least one criterion is at least one of:
- when at a given time compared to an earlier or later given time the received price of electricity transferred to the at least one second energy (216) source is higher than that of the transfer price, then minimize the amount of energy consumed and maximize transfer to the at least one second energy source (216);
- when a spot price of electricity at the given time is greater than a predefined transfer price of electricity at the given time, minimizing the amount of energy consumed at the given time and transferring the excess energy to the at least one second energy source (216);
- when a spot price of electricity at another given time is greater than a transfer price of electricity at the given time, using the excess energy for consumption by the at least one load (218) so as to nullify or minimize a requirement of spot-priced energy;
- when a spot price of electricity is negative, using the excess energy for consumption by the at least one load (218) so as to maximize the amount of energy consumed at the given time such that the excess energy is untransferred or minimally-transferred to the at least one second energy source (216);
- when a total price of electricity is negative, controlling the at least one first energy source (214) to minimize the amount of energy produced by the at least one first energy source, wherein the total price of electricity is a sum of spot price of electricity at the given time and the transfer price of electricity at the given time;
- utilizing a priority order (300) to use the excess energy for consumption by the at least one load (218), wherein the priority order is an order of decreasing priorities in which the excess energy is to at least be consumed by the at least one load.

12. A method according to claim 11, wherein the step of using the excess energy for consumption by the at least one load (218) is performed based on at least one factor, the at least one factor being at least one of:
- the amount of the excess energy that is produced at the given time;
- an energy storage capacity of a given load at the given time;
- an energy consumption capacity of a given load at the given time;
- energy requirements for providing a required temperature in a given region of the premises (202, 404) at a later time than the given time;
- a limit of a thermostat associated with a given load;
- a time selected for energy consumption by a given load;
- a time period required for energy consumption by a given load;
- the priority order (300).

13. A computer-program product for managing energy at a premises (202, 404), wherein the computer program product comprises a non-transitory machine-readable data storage medium having stored thereon program instructions that, when accessed by a processing device, cause the processing device to execute steps of a method of any of claims 11-12.
